# EUROPÄISCHE PATENTSCHRIFT

(11) **EP 1 004 418 B1**
(45) Veröffentlichungstag und Bekanntmachung des Hinweises auf die Patenterteilung: **11.02.2004**
(21) Anmeldenummer: 99250388.8
(22) Anmeldetag: 03.11.1999
(51) Int. Cl.: B60R 13/02, B29C 41/22

(54) **Innenverkleidungsteil für Kraftfahrzeuge und Verfahren zu dessen Herstellung**
Interior liner for motor vehicles and method for making same
Revêtement intérieur de véhicules automobiles et procédé pour sa fabrication

(30) Priorität: 25.11.1998 DE 19855277
(43) Veröffentlichungstag der Anmeldung: 31.05.2000
(73) Patentinhaber: SAI Automotive SAL GmbH, 76732 Wörth am Rhein (DE); Volkswagen Aktiengesellschaft, 38436 Wolfsburg (DE)
(72) Erfinder: Kirchbaumer, Georg, 36251 Bad Hersfeld (DE); Mayer, Wolfgang, Dr., 75744 Wörth (DE); Poweleit, Udo, 38465 Bromme (DE)
(74) Vertreter: Pfenning, Meinig & Partner GbR

(56) Entgegenhaltungen:
- EP-A- 0 103 407
- EP-A- 0 517 615
- EP-A- 0 718 097
- DE-A- 4 035 822
- DE-A- 19 533 367
- FR-A- 2 481 210
- US-A- 5 582 789
- US-A- 5 779 262
- US-A- 5 803 489
- PATENT ABSTRACTS OF JAPAN vol. 015, no. 203 (M-1116), 24. Mai 1991 (1991-05-24) & JP 03 055218 A (INOATSUKU CORP:KK), 11. März 1991 (1991-03-11)

## Beschreibung

Die Erfindung betrifft ein Innenverkleidungsteil gemäß dem Oberbegriff des Anspruches 1 sowie ein Verfahren zu seiner Herstellung nach dem Oberbegriff des Anspruchs 13.

Es ist bekannt, Innenverkleidungsteil für Kraftfahrzeuge dadurch herzustellen, daß formstabile Trägerteile und vorgeformte Oberflächenschichten in gesonderten Schäumwerkzeugen durch eine sich ausbildende Schaumschicht (Hinterschäumung) miteinander verbunden werden. Vor allem Instrumenttafelverkleidungen und Fahrgastsitze werden zur zeit auf diese Weise gefertigt. Die formstabilen Trägerteile können dabei aus an sich beliebigen Werkstoffen bestehen (Holzfaserwerkstoff, Blech), bevorzugt werden aber Trägerteile aus spritzgegossenen oder gepreßten Thermoplasten verwendet. Die vorgeformten Oberflächenschichten sind bevorzugt sogenannte "Slush-Häute", das heißt durch Sintern oder Schlickern in gesonderten Werkzeugen hergestellt Formhäute, überwiegend aus PVC-Werkstoffen (siehe beispielsweise DE 39 32 923 A1). Wenn auch die beschriebene Vorgehensweise zum erfolgreich praktizierten Stand der Technik gehört, so gelten vor allem zwei Probleme als noch nicht vollständig gelöst:
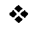 Die zur Zeit mangelhafte Haftfähigkeit zwischen Hinterschäumung und der Slush-Haut, und
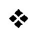 die Diffusion von Weichmachern aus Slush-Haut in die Hinterschäumung.

Um die Haftung zwischen der Hinterschäumung und der Slush-Haut zu verbessern, ist es üblich, dem Schaum einen Haftvermittler beizumischen. Jedoch führt die Abwanderung von Weichmachern in den Schaum zu einer Abnahme der Flexibilität der Slush-Haut im Laufe der Lebensdauer des Innenverkleidungsteiles (Langzeitalterung) und ggf. auch zu einer Beeinträchtigung der Schaumqualität. Man versucht, den Weichmacherverlust der Slush-Haut durch eine Vergrößerung der Wanddicke zu kompensieren, d.h. also insgesamt einen größeren "Vorrat" an Weichmachern bereitzustellen, mit dem Nachteil, daß neben größeren Herstellungskosten der Slush-Haut auch zusätzliches Gewicht erhalten wird, das vermeidbar wäre. Verschärft wird die Problematik der Weichmacherdiffusion noch durch den folgenden Umstand. Zunehmend besitzen Innenverkleidungsteile von Fahrzeugen Bereiche, hinter denen Airbags angeordnet sind, die jedoch häufig nicht erkennbar sein sollen. Um ein definiertes Aufreißen der Kaschierung, vorzugsweise einer Slush-Haut im Falle einer Auslösung des Airbags, sicherzustellen, ist es üblich, den Umriss des Öffnungsbereiches des Airbags in der Kaschierung mechanisch zu schwächen, z.B. durch Einritzen oder Laserperforieren (ältere Anmeldung DE 198 00 815). Derartig exponierte Bereiche sind jedoch bevorzugte Orte für die Weichmacherdiffusion, was beispielsweise zu unerwünschten Markierungen auf der Sichtseite der Innenverkleidungsteile führen kann.

Aus der FR-A-2 481 210 ist bereits ein Innenverkleidungsteil für Kraftfahrzeuge bekannt, das aus einer Trägerschicht und einer Dekorschicht mit einer dazwischen liegenden Klebstoffschicht besteht. Eine zusätzliche Sperrschicht zwischen Träger- und Dekorschicht soll bei einer thermischen Verformung, bei der das Verkleidungsteil in die gewünschte Form gebracht wird, verhindern, dass eine Diffusion von die Eigenschaften der Dekorschicht beeinträchtigenden Substanzen aus der Trägerschicht in die Dekorschicht stattfinden. Solche Substanzen können beispielsweise Weichmacher sein. Die Sperrschicht kann aus einem Polyesterfilm bestehen, der auf beiden Seiten mit einer Klebstoffschicht versehen ist. Die Sperrschicht kann jedoch auch selbst Hafteigenschaften aufweisen.

Weiterhin zeigt die EP 0 103 407 A1 einen mehrschichtigen dekorativen Gegenstand mit einem Weichmacher enthaltenden Vinylsubstrat, einer darüber angeordneten Haftschicht, die mit einer Sperrschicht für Weichmacher bedeckt ist. Auf der Sperrschicht befindet sich ein Vinylfilm, der in gewünschter Weise bedruckt sein kann.

Ist das Innenverkleidungsteil mit Sollbruchstellen in der Trägerschicht für den Durchtritt eines Airbags versehen, dann enthält auch die Dekorschicht auf der der Hinterschäumung zugewandten Seite eine von außen nicht sichtbare Reißnaht. Hierbei kann die Gefahr bestehen, dass eine einen Durchtritt von Weichmachern verhindernde Sperrschicht zwischen der Hinterschäumung und der Dekorschicht in die Reißnaht eindringt und diese verklebt, so dass die gewünschte mechanische Schwächung der Dekorschicht durch die Reißnaht aufgehoben wird.

Es ist daher die Aufgabe der vorliegenden Erfindung, ein Innenverkleidungsteil für Fahrgastzellen von Kraftfahrzeugen, bestehend aus einem formstabilen Trägerteil und einer sichtseitigen dekorativen Oberflächenhaut, die mit dem Trägerteil durch eine Hinterschäumung verbunden ist, wobei zwischen der Oberflächenhaut und der Hinterschäumung eine die Diffusion niedermolekularer organischer Substanzen (Weichmacher) zumindest behindernde Haftvermittlungsschicht angeordnet ist, so auszubilden, dass es auch als Abdeckung für Airbags verwendet werden kann.

Diese Aufgabe wird erfindungsgemäß gelöst durch ein Innenverkleidungsteil mit den Merkmalen des Anspruchs 1. Vorteilhafte Weiterbildungen des erfindungsgemäßen Innenverkleidungsteils ergeben sich aus den Unteransprüchen. Das erfindungsgemäße Verfahren weist die Merkmale des Anspruchs 13 auf.

Dadurch, dass eine vorgekerbte Reißnaht in der Oberflächenhaut gegen eine Verklebung durch die Haftvermittlungsschicht versiegelt ist, behält die Reißnaht ihre Schwächungsfunktion, so dass diese bei der Auslösung des Airbags bestimmungsgemäß das Aufreißen der Oberflächenhaut ermöglicht.

Als Oberflächenhaut wird vorzugsweise eine Slush-Haut verwendet, vor allem die Diffusion der Weichmacher lässt sich positiv beeinflussen, wenn die multifunktionale Haftvermittlungsschicht aus Polymeren besteht, die ein kleines molekulares Dipolmoment besitzen. Derartige Substanzen zeigen nur geringe Lösungseigenschaften für Weichmacher und sind daher als Diffusionssperren für diese besonders geeignet. Ist die Schmelzpunkt-Temperatur der multifunktionalen Haftvermittlungsschicht niedriger als diejenige der Slush-Haut, so ergibt sich die vorteilhafte Möglichkeit, die Haftvermittlungsschicht direkt nach der Herstellung der Slush-Haut mit Haftvermittlungsschicht vorzufertigen, im Bereich eines unsichtbaren Airbags vorzuschwächen und die Haftvermittlungsschicht durch nachträgliche thermische Behandlung über den geschwächten Bereichen der Slush-Haut wieder diffusionsdicht zu schließen, ohne diese Schwächung in der Slush-Haut selbst rückgängig zu machen. Diese besonders diffusionsanfälligen Bereich können so sicher abgedichtet werden. Da die Dicke der Haftvermittlungsschicht vernachlässigbar gering gegenüber der Dicke der Slush-Haut ist, wird die gewünschte Schwächung der Slush-Haut nicht beeinträchtigt.

Als Werkstoff für die multifunktionale Haftvermittlungsschicht kommen Polyurethan-Werkstoffe infrage, die vor allem wegen ihrer chemischen Verwandtschaft zum Schaum besonders geeignet sind; aber auch Haftvermittlungsschichten aus thermoplastischen Elastomeren (TPE) auf der Basis von Styrenen und/oder Polyamiden und/oder Polyestern sind gut für den beabsichtigten Einsatz geeignet, wobei auch Mischungen aus mehreren Komponenten zweckmäßig sein können. Alternativ ist es natürlich auch möglich, die Haftvermittlungsschicht aus einem Verbund von mindestens zwei Schichten auszubilden, die unterschiedliche Beschaffenheit aufweisen, um auf diese Weise den unterschiedlichen Anforderungen bezüglich Haftvermittlung und Diffusionssperrung optimal gerecht zu werden.

Eine Metallisierung als Haftvermittlungsschicht hat sowohl hinsichtlich einer Haftvermittlung als auch vor allem hinsichtlich der Unterdrückung einer Weichmacherdiffusion gute Eigenschaften. Die Metallisierung kann dabei mit den zum Stand der Technik gehörenden Aufbringungsverfahren ganzflächig oder in Teilbereichen durchgeführt werden, wobei eine Teilbereichaufbringung bevorzugt für die Abdeckung unsichtbarer Airbags vorgesehen werden kann. Es ist naturgemäß auch möglich, ganz- oder teilflächige Metallisierungen mit anderen der aufgeführten Werkstoffe in einem Schichtverbund zu kombinieren.

Besteht die Haftvermittlungsschicht aus mindestens einem der aufgeführten organischen Werkstoffe, so kann es zweckmäßig sein, sie als Sinterschicht auszubilden, die dann in dem gleichen Werkzeug auf die Slush-Haut aufgebracht werden kann, in dem diese gefertigt wurde, ggf. auch in der gleichen wärme. Es ist aber ebenso gut möglich, die Haftvermittlungsschicht als Lösung und/oder Dispersion mit üblichen Verfahren, wie Spritzen oder Streichen, als Lackschicht auf die Rückseite der Slush-Haut aufzubringen. Damit wird es in einfacher Weise möglich, nur Teilbereich der Slush-Haut mit der Haftvermittlungsschicht zu überdecken, beispielsweise nur den Bereich der Durchtrittsöffnung eines unsichtbaren Airbags mit der entsprechenden Vorschwächung, wo ohne die Haftvermittlungsschicht die erhöhte Gefahr der Weichmacherdiffusion besteht.

Wird die Haftvermittlungsschicht wie beschrieben als Lackschicht in einem gesonderten Arbeitsgang aufgebracht, so kann dieses vorteilhafterweise dann geschehen, wenn die Slush-Haut bereits in das Schäumwerkzeug eingebracht ist. Dieses hat den Vorteil, daß eine Beschädigung der Haftvermittlungsschicht beispielsweise durch Transport, Lagerung oder Positionierung im Werkzeug ausgeschlossen wird, so dass die Haftvermittlungsschicht ggf. dünner ausgebildet sein kann.

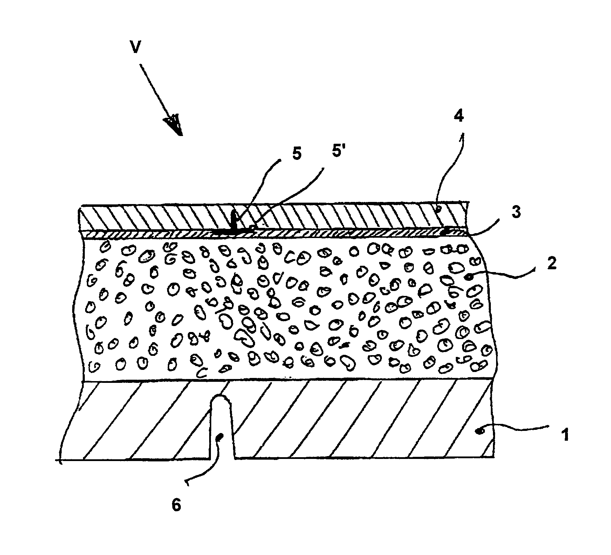

Die Erfindung wird nunmehr anhand der Figur näher erläutert, die einen schematischen Schnitt durch ein erfindungsgemäßes Innenverkleidungsteil zeigt, und zwar an einer Stelle, an der eine Reißnaht für den Öffnungsbereich eines unsichtbaren Airbags durch Schwachstellen im Trägerteil und in der Slush-Haut vorgegeben ist. Mit 1 ist ein Trägerteil bezeichnet, das eine Sollbruchstelle 6 besitzt. Eine Hinterschäumung 2 verbindet eine die Sichtseite des Verkleidungsteiles V bildende Slush-Haut 4 mit dem Trägerteil 1, wobei eine multifunktionale Haftvermittlungsschicht 3 (in der Figur der Deutlichkeit halber im Vergleich zu den anderen Schichten dicker dargestellt als in der Wirklichkeit) sowohl für gute Haftung zwischen Hinterschäumung 2 und Slush-haut 4 sorgt als auch eine Diffusion von Weichmacheranteilen aus der Slush-Haut 4 in die Hinterschäumung 2 unterbindet. Eine Schwachstelle 5, die in Form eines einkerbenden Schnittes in die Slush-Haut 4 eingebracht ist, ist durch eine Überdeckung 5' gegen ein Verkleben durch die multifunktionale Haftvermittlungsschicht 3 geschützt. Diese Überdeckung 5' kann unterschiedlich ausgebildet sein: am einfachsten ist die Ausführung als Schutzlack, der zumindest die Schwachstelle 5 ausfüllt und der dabei nur eine geringe Eigenfestigkeit hat, so daß die Funktion der Schwachstelle 5 nicht beeinträchtigt wird.

## Patentansprüche

1. Innenverkleidungsteil (V) für Fahrgastzellen von Kraftfahrzeugen, bestehend aus einem formstabilen Trägerteil (1) und einer sichtseitigen dekorativen Oberflächenhaut (4), die mit dem Trägerteil (1) durch eine Hinterschäumung (2) verbunden ist, **dadurch gekennzeichnet, dass**
zwischen der Oberflächenhaut (4) und der Hinterschäumung (2) eine die Diffussion niedermolekularer organischer Substanzen (Weichmacher) zumindest behindernde Haftvermittlungsschicht (3) angeordnet ist, und dass
eine vorgekerbte Reißnaht (5) in der Oberflächenhaut (4) gegen eine Verklebung durch die Haftvermittlungsschicht (3) versiegelt ist.

2. Innenverkleidungsteil nach Anspruch 1, **dadurch gekennzeichnet, dass** die Oberflächenhaut (4) durch ein Sinter- oder Schlickerverfahren ("slush-moulding"-Verfahren) hergestellt ist.

3. Innenverkleidungsteil nach Anspruch 1 oder 2, **dadurch gekennzeichnet, dass** die Haftvermittlungsschicht (3) aus einem Polymer mit kleinem molekularen Dipolmoment besteht.

4. Innenverkleidungsteil nach einem der Ansprüche 1 bis 3, **dadurch gekennzeichnet, dass** die Schmelzpunkt-Temperatur des Werkstoffes der Haftvermittlungsschicht (3) gleich der oder niedriger als die des Werkstoffes der Oberflächenhaut (4) ist.

5. Innenverkleidungsteil nach einem der Ansprüche 1 bis 4, **dadurch gekennzeichnet, dass** die Haftvermittlungsschicht (3) aus Polyuretan-Werkstoffen und/oder PUR-haltigen Werkstoffmischungen besteht.

6. Innenverkleidungsteil nach einem der Ansprüche 1 bis 4, **dadurch gekennzeichnet, dass** die Haftvermittlungsschicht (3) aus einem thermoplastischen Elastomer (TPE) und/oder aus Mischungen derartiger Werkstoffe besteht.

7. Innenverkleidungsteil nach Anspruch 6, **dadurch gekennzeichnet, dass** die Haftvermittlungsschicht (3) aus TPE-Werkstoffen auf der Basis von Styrenen und/oder Polyolefinen und/oder Polyamiden und/oder Polyestern besteht.

8. Innenverkleidungsteil nach einem der vorangehenden Ansprüche, **dadurch gekennzeichnet, dass** die Haftvermittlungsschicht (3) ein Verbund von mindestens zwei Schichten unterschiedlicher Beschaffenheit ist.

9. Innenverkleidungsteil nach einem der vorangehenden Ansprüche, **dadurch gekennzeichnet, dass** die Haftvermittlungsschicht (3) zumindest bereichsweise eine Metallisierung ist oder eine Metallisierungsschicht enthält.

10. Innenverkleidungsteil nach einem der vorangehenden Ansprüche, **dadurch gekennzeichnet, dass** die Haftvermittlungsschicht (3) eine Sinterschicht ist.

11. Innenverkleidungsteil nach einem der Ansprüche 1 bis 10, **dadurch gekennzeichnet, dass** die Haftvermittlungsschicht (3) eine als Lösung und/oder Dispersion auf die Oberflächenhaut (4) aufgebrachte Lackschicht ist.

12. Innenverkleidungsteil nach einem der vorangehenden Ansprüche, **dadurch gekennzeichnet, dass** die Haftvermittlungsschicht (3) nur einen Teilbereich der Oberflächenhaut (4) überdeckt.

13. Verfahren zur Herstellung eines Innenverkleidungsteils für Fahrgastzellen von Kraftfahrzeugen, bestehend aus einem formstabilen Trägerteil (1) und einer sichtseitigen dekorativen Oberflächenhaut (4), die mit dem Trägerteil (1) durch eine Hinterschäumung (2) verbunden wird, **dadurch gekennzeichnet**, das zwischen der Oberflächenhaut (4) und der Hinterschäumung (2) eine die Diffussion niedermolekularer organischer Substanzen (Weichmacher) zumindest behindernde Haftvermittlungsschicht (3) angeordnet wird, und dass
die Haftvermittlungsschicht (3) vor dem Hinterschäumen fest mit der Oberflächenhaut (4) verbunden wird, wobei eine vorgekerbte Reißnaht (5) in der Oberflächenhaut (4) gegen eine Verklebung durch die Haftvermittlungsschicht (3) versiegelt wird.

14. Verfahren nach Anspruch 13, **dadurch gekennzeichnet, dass** die Haftvermittlungsschicht (3) im Sinterwerkzeug der Oberflächenhaut (4) im Anschluss an deren Herstellung aufgebracht wird.

15. Verfahren nach Anspruch 13, **dadurch gekennzeichnet, dass** die Haftvermittlungsschicht (3) in einem gesonderten Arbeitsgang aufgebracht wird.

16. Verfahren zur Herstellung von Innenverkleidungsteilen nach Anspruch 13, **dadurch gekennzeichnet, dass** die Haftvermittlungsschicht (3) zumindest bereichsweise auf die Rückseite der Oberflächenhaut (4) im Schäumwerkzeug aufgebracht wird.

## Claims

1. Interior lining part (V) for passenger cabins of motor vehicles, comprising a s hape-resistant s upport element (1) a nd a t the visible side a decorative surface skin (4) which is linked to the support element (1) by rearside foaming (2), **characterised in that** between the surface skin (4) and the rearside foaming (2) is arranged an adhesion promoting layer (3) which at least inhibits diffusion of low-molecular organic substances (plasticiser), and a pre-scored tearing seam (5) is sealed in the surface skin (4) against adhesion by the adhesion promoting layer (3).

2. Interior lining part according to Claim 1, **characterised in that** that the surface skin (4) is produced by a sintering or slush-moulding process.

3. Interior lining part according to Claim 1 or 2, **characterised in that** the adhesion promoting layer (3) is composed of a polymer of small molecular dipole moment.

4. Interior lining part according to one of Claims 1 to 3, **characterised in that** the melting point temperature of the material of the adhesion promoting layer (3) is equal to or below that of the material of the surface skin (4).

5. Interior lining part according to one of Claims 1 to 4, **characterised in that** the adhesion promoting layer (3) is composed of polyurethane materials and/or PUR-containing material mixtures.

6. Interior lining part according to one of Claims 1 to 4, **characterised in that** the adhesion promoting layer (3) is composed of a thermoplastic elastomer (TPE) and/or mixtures of materials of that kind.

7. Interior lining part according to Claim 6, **characterised in that** the adhesion promoting layer (3) is composed of TPE materials based on styrenes and/or polyolefins and/or polyamides and/or polyesters.

8. Interior lining part according to one of the above claims, **characterised in that** the adhesion promoting layer (3) is a composite of at least two layers of different properties.

9. Interior lining part according to one of the above claims, **characterised in that** the adhesion promoting layer (3) is at least in some areas metalised or contains a metalisation layer.

10. Interior lining part according to one of the above claims, **characterised in that** the adhesion promoting layer (3) is a sinter layer.

11. Interior lining part according to one of Claims 1 to 10, **characterised in that** the adhesion promoting layer (3) is a lacquer layer applied as a solution and/or dispersion onto the surface skin (4).

12. Interior lining part according to one of the above claims, **characterised in that** the adhesion promoting layer (3) covers only a sectional area of the surface skin (4).

13. Method for making an interior lining part for passenger cabins of motor vehicles, comprising a shape-resistant support element (1) and at the visible side a decorative surface skin (4) which is linked to the support element (1) by rearside foaming (2), **characterised in that** between the surface skin (4) and the rearside foaming (2) is arranged an adhesion promoting layer (3) which at least inhibits diffusion of low-molecular organic substances (plasticiser), and the adhesion promoting layer (3) is prior to rearside foaming firmly linked to the surface skin (4), and a pre-scored tearing seam (5) is sealed in the surface skin (4) against adhesion by the adhesion promoting layer (3).

14. Method according to Claim 13, **characterised in that** the adhesion promoting layer (3) is applied in the sinterung tool of the surface skin (4) directly following its manufacture.

15. Method according to Claim 13, **characterised in that** the adhesion promoting layer (3) is applied in a separate work stage.

16. Method for manufacturing interior lining parts according to Claim 13, **characterised in that** the adhesion promoting layer (3) is at least in some areas applied to the rear of the surface skin (4) in a foaming tool.

## Revendications

1. Elément d'habillage intérieur (V) pour habitacle de passagers de véhicule automobile, constitué d'un élément porteur (1) indéformable et d'une peau superficielle (4) décorative, située du côté visible, qui est reliée à l'élément porteur (1) par une mousse de doublage (2), **caractérisé en ce qu'**entre la peau superficielle (4) et la mousse de doublage (2), il est disposé une couche conférant de l'adhérence (3) qui au moins empêche la diffusion de substances organiques à bas poids moléculaire (plastifiants) et **en ce qu'**un cordon de déchirement (5) pré-entaillé, situé dans la peau superficielle (4), est protégé d'un collage par la couche conférant de l'adhérence (3).

2. Elément d'habillage intérieur suivant la revendication 1, **caractérisé en ce que** la peau superficielle (4) est produite au moyen d'un procédé de frittage ou d'embouage (procédé "slush-moulding").

3. Elément d'habillage intérieur suivant la revendication 1 ou 2, **caractérisé en ce que** la couche conférant de l'adhérence (3) est constituée d'un polymère possédant un faible moment dipolaire moléculaire.

4. Elément d'habillage intérieur suivant l'une des revendications 1 à 3, **caractérisé en ce que** la température de point de fusion de la matière de la couche conférant de l'adhérence (3) est égale ou inférieure à celle de la matière de la peau superficielle (4).

5. Elément d'habillage intérieur suivant l'une des revendications 1 à 4, **caractérisé en ce que** la couche conférant de l'adhérence (3) est constituée de matières du type polyuréthane et/ou de mélanges de matières contenant du PUR.

6. Elément d'habillage intérieur suivant l'une des revendications 1 à 4, **caractérisé en ce que** la couche conférant de l'adhérence (3) est constituée d'un élastomère thermoplastique (ETP) et/ou de mélanges de telles matières.

7. Elément d'habillage intérieur suivant la revendication 6, **caractérisé en ce que** la couche conférant de l'adhérence (3) est constituée de matières du type ETP sur la base de styrènes et/ou de polyoléfines et/ou de polyamides et/ou de polyesters.

8. Elément d'habillage intérieur suivant l'une des revendications précédentes, **caractérisé en ce que** la couche conférant de l'adhérence (3) est un produit composite d'au moins deux couches de nature différente.

9. Elément d'habillage intérieur suivant l'une des revendications précédentes, **caractérisé en ce que**, au moins par zones, la couche conférant de l'adhérence (3) est une métallisation ou contient une couche de métallisation.

10. Elément d'habillage intérieur suivant l'une des revendications précédentes, **caractérisé en ce que** la couche conférant de l'adhérence (3) est une couche de frittage.

11. Elément d'habillage intérieur suivant l'une des revendications 1 à 10, **caractérisé en ce que** la couche conférant de l'adhérence (3) est une couche de vernis déposée sous forme de solution et/ou de dispersion sur la peau superficielle (4).

12. Elément d'habillage intérieur suivant l'une des revendications précédentes, **caractérisé en ce que** la couche conférant de l'adhérence (3) ne recouvre qu'une zone partielle de la peau superficielle (4).

13. Procédé d'élaboration d'un élément d'habillage intérieur pour habitacle de passagers de véhicule automobile, constitué d'un élément porteur (1) indéformable et d'une peau superficielle (4) décorative, située du côté visible, qui est reliée à l'élément porteur (1) par une mousse de doublage (2), **caractérisé en ce qu'**entre la peau superficielle (4) et la mousse de doublage (2), il est disposé une couche conférant de l'adhérence (3) qui au moins empêche la diffusion de substances organiques à bas poids moléculaire (plastifiants) et **en ce que** la couche conférant de l'adhérence (3) est rendue solidaire à demeure de la couche superficielle (4) avant la formation de mousse de doublage, un cordon de déchirement (5) pré-entaillé, situé dans la peau superficielle (4), étant protégé d'un collage par la couche conférant de l'adhérence (3).

14. Procédé suivant la revendication 13, **caractérisé en ce que** la couche conférant de l'adhérence (3) est déposée dans l'outil de frittage de la peau superficielle (4) à la suite de la réalisation de celle-ci.

15. Procédé suivant la revendication 13, **caractérisé en ce que** la couche conférant de l'adhérence (3) est déposée dans une phase de travail particulière.

16. Procédé d'élaboration d'éléments d'habillage intérieur suivant la revendication 13, **caractérisé en ce que** la couche conférant de l'adhérence (3) est déposée au moins par zones sur la face arrière de la peau superficielle (4) dans l'outil de formation de mousse.
